(19) **Europäisches Patentamt / European Patent Office / Office européen des brevets**

(11) **EP 1 488 580 B1**

(12) **EUROPEAN PATENT SPECIFICATION**

(45) Date of publication and mention
of the grant of the patent:
**17.07.2013 Bulletin 2013/29**

(21) Application number: **03722711.3**

(22) Date of filing: **28.03.2003**

(51) Int Cl.:
*H04Q 11/04* (2006.01)     *H04L 12/70* (2013.01)

(86) International application number:
**PCT/GB2003/001372**

(87) International publication number:
**WO 2003/084152 (09.10.2003 Gazette 2003/41)**

(54) **METHOD AND ARRANGEMENT FOR DINAMIC ALLOCATION OF NETWORK RESOURCES**

VERFAHREN UND ARRANGEMENT ZUR DYNAMISCHEN ZUTEILUNG VON NETZRESSOURCEN

PROCEDE ET AGENCEMENT PERMETTANT L'ATTRIBUTION DYNAMIQUE DE RESSOURCE DE RESEAU

(84) Designated Contracting States:
**AT BE BG CH CY CZ DE DK EE ES FI FR GB GR HU IE IT LI LU MC NL PT RO SE SI SK TR**

(30) Priority: **28.03.2002 GB 0207507**

(43) Date of publication of application:
**22.12.2004 Bulletin 2004/52**

(73) Proprietor: **Ericsson AB**
**164 80 Stockholm (SE)**

(72) Inventor: **MOORE, Andrew Dr.**
**Cambridge CB2 2JG (GB)**

(74) Representative: **Stasiewski, Piotr Grzegorz et al**
**Ericsson Limited**
**Patent Unit Optical Networks**
**Unit 4 Midleton Gate**
**Guildford Business Park**
**Guildford,**
**Surrey GU2 8SG (GB)**

(56) References cited:
**WO-A-02/09358     WO-A-97/14240**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to an apparatus for providing communications network resource.

In the past, networks -- in particular those used to support the Internet -- would share resources: the buffers of the routers and the line capacity of the connections between routers and hosts, between all network users. In the modem network it is desirable to divide the resource between different network traffic types. Rather than the shared service of the common Internet, network providers wish to divide the resource between the traffic types based on other characteristics such as their willingness to pay for service, their need for differing service quality or some combination of the two.

Network-elements (routers and switches) that employ resource partitioning, such as the division of link bandwidth between different classes of traffic, have used a scheduler that fixed, as part of its algorithm, the amount of the resource (outgoing bandwidth) to be allocated to each class.

As a result, traffic queued in network routers that was not serviced could be either delayed or lost as the queue filled and overflowed. In such a scheme the resources of buffer-space and the service-weights of the scheduler were allocated according to policy e.g. based on a simple priority scheme or with an assigned weighting based on the value of each traffic class.

Past interest in traffic characterisation has noted the difficulties inherent in this approach. These schemes are difficult both to configure initially and to keep correct under changing network demand - as a result such schemes waste resource and are limited in the complexity of services offered.

There is known a document related to queue servicing in packet switched networks, namely WO97/14240A1. However arrangement and operations as in the invention now to be described are neither disclosed nor suggested in the prior art document.

The present invention provides an apparatus for providing communications network resource to a plurality of classes of use of the network where a different level of service being associated with each said class of use. Said apparatus comprises: a demand estimator for estimating the demand for each of said plurality of classes of use; a dynamic resource allocator for allocating to each class a proportion of said communications network resource. In use, the dynamic resource allocator is adapted to dynamically adjust respective buffer depth for each of the classes for queuing data packets. The proportion allocated being dependent on the estimated demand for each class and the allocation optimising use of the available resource whilst at the same time ensuring that the level of service of each class is observed. Said apparatus also comprises a communications network element for providing to each class the proportion of network resource allocated to it.

The present invention proposes the use of a Measurement-Based Estimator (MBE) of bandwidth requirements to enhance the performance of resource scheduling. An advantage of this approach is that it may be retro-fitted to current network-elements without significant drawback. Dynamic allocation could be added to any network-element as needs dictated. In such a per-network-element approach, the MBE is used to compute the precise resource weighting of the demand of each traffic type. This estimate is then used to adjust the weights of scheduling algorithms as well as adjust the depth and behaviour of buffering.

Building upon the substantial work that has been invested in Measurement-based Admission Control (MBAC), an MBAC Algorithm is adapted to continuously provide measurement-based estimations of bandwidth requirements and a dynamic resource allocator is built upon this MBE.

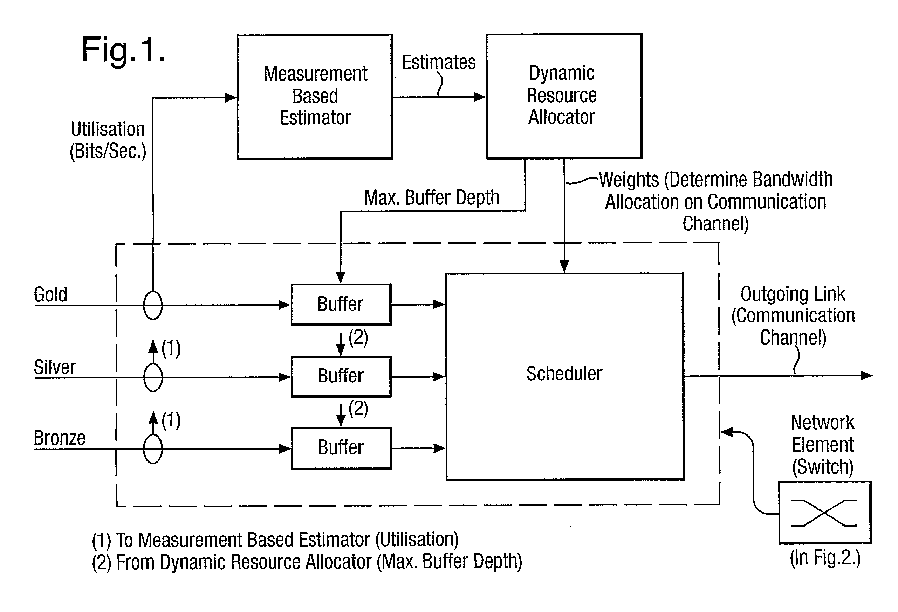

A block diagram of a system in accordance with the invention is given in Figure 1. The dynamic allocation system consists of a method for computing the demand of each traffic class. In the implementation presented here, the Measurement-Based Estimator computes the demand of each class using measurements of line utilisation, these estimates of demand are then provided to the dynamic resource allocator. The dynamic resource allocator is able to configure the weights of a scheduler, (e.g. the weights of a weighted-round-robin scheduler), and the maximum buffer depth that a particular traffic class may use. The network-element will impose these configured restrictions upon the classes of traffic as they are multiplexed onto the outgoing link.

Differentiated services may simply be defined as he ability of a network to offer two or more types of network behaviour to the network users. Examples of such networks include a network offering low-latency or a network that offers low-loss. The combined approach of admission control and an appropriate scheduling algorithm has long been considered central to supplying Quality-of-Service (QoS) in an integrated services network. However, admission control is not generally considered practical in networks such as the modem Internet. Attempts at introducing Admission Control techniques (e.g. IntServ/ RSVP) are considered largely impractical to implement on a wide scale.

Networks wishing to provide QoS but without explicit admission control are a central idea of the approach of the differentiated-services network architecture, DiffServ. Flows carried in a differentiated services system such as DiffServ do not receive an individual guarantee of resources. Instead, a guarantee is made to the class of traffic to which each flow belongs. The class of traffic will receive all the resources it requires but individual flow properties and flow interaction will mean that the per-flow resourcing will be only statistical in nature. This means that at any instant one particular flow may receive greater or fewer resources than it requires.

The following concentrates upon a single network-element, e.g. a core router, carrying several, pre-classified, classes of traffic. Two particular types of service differentiation are used as examples and these two schemes are now explained in detail.

In the Olympic Service implemented using Assured Forwarding, there exists three classes: bronze, silver, and gold. Traffic in each of these three classes is configured so that the gold class experiences lighter load than the silver and the silver experiences lighter load than the bronze. While for bandwidth allocation a simple implementation may assign a fixed quantity of resource to each class, perhaps 50% to Gold, 30% to silver and 20% to bronze. Such a fixed allocation will neglect the actual requirements of each traffic class.

The benefit of the dynamic allocation scheme of the present invention is that it is able to ensure Gold demands are met in priority to Silver demands and in-turn meeting Silver demands while the remainder service is given to Bronze. Yet such a scheme adapts to the current requirements of each class. Thus if Silver is not using its total allocation, this left-over is made available to Bronze. Such a scheme permits minimal waste of resource while allowing the construction of new services such as a "best effort" (BE) class that receives resource only when the higher priority gold, silver and bronze classes have received their required allocations.

In contrast to a set of classes each having a different level of requirement in the same resource-type, an alternative set of offerings may be the combination of traffic classes, each with differing requirements of different resources. An example of such orthogonal combinations of service would be a low-loss service and a low-delay (or low delay-variation) service. This pair of traffic classes is a combination of the assured and expedited forwarding classes of DiffServ.

The use of a programmable, dynamic network-element able to adapt to the changing requirements of network traffic allows considerable scope for a sophisticated policy allocating the available resources to traffic requirements. Two examples of broad allocation policy are the Olympic and orthogonal service. However a policy must be more complete.

The resolution procedure when network resources are over (or under) allocated must be specified in the allocation policy. One example of such a resolution procedure would be through the use of a priority mechanism. In such a scheme, the top priority traffic class must be satisfied completely and then the next highest priority and so on. In the Olympic service differentiation it is clear that Gold will take precedence over all below it, Silver will take precedence over all but Gold, and so on. As an alternative to priority ordering, a second example for under-resourcing would be to diminish the actual resource to all classes of traffic, thus the drawback of under-resourcing is shared proportionally among the competing classes.

In the case of over-resourcing, where more resource is available than required, the solution adopted may be to share the excess bandwidth evenly among the different traffic classes. An alternative approach for over-resourcing may be to allocate the excess resource to a best effort class of traffic, one that would only receive resource when all other classes had received their allocation.

Clearly, ample opportunity exists for complex reconciliation behaviour. For the examples described later, the reconciliation behaviour is priority based for both the Olympic and orthogonal differentiated service examples. In this way, the best effort service in each example is provided with service only after the commitment of resource to all other classes of traffic has been made. The priority ordering for the Olympic service is Gold, Silver, Bronze and then best effort, while the priority ordering for the orthogonal differentiated service example is delay-constrained traffic, loss-constrained and finally the elastic traffic (using a best effort mechanism).

The approach is that a network-element will use a combination of scheduler and control to offer differentiated services. Several assumptions are made with regard to the traffic that impact how particular traffic types will be supplied resource by the network-element.

In particular, a first assumption is that for delay-sensitive network traffic, packets delayed beyond the traffic's delay boundary are of no value. This implies that delay-sensitive network traffic is best-served by a combination of buffer discard threshold dictated by that delay-boundary and a non-workconserving scheduling algorithm. In contrast, network traffic that is bounded by loss would be buffered to a depth that did not void any delay constraints while being served at a rate that satisfied the loss constraints. Traffic that is throughput guaranteed is considered the most trivial traffic type requiring only limited buffering and a fixed buffer service rate. Finally, best-effort traffic may make use of the remaining buffer and service bandwidth providing a left-over service; in this way the best-effort may obtain potentially all network resource but without causing starvation of any resource to which a guarantee has been made.

A key property to allow for the several different classes of this type is a packet scheduler with sufficient flexibility as to be able to bound the delay any particular session incurs in addition to simply dividing up the bandwidth resource. The ideal scheduler is one able to emulate Generalised Processor Sharing (GPS) scheduling -- one able to (infinitely) divide up resource service between different traffic classes; thereby bounding delay while providing flexible service offerings. The GPS algorithm is not easily implemented in practice however a close emulation of GPS is available to packet networks that use a fixed cell length.

The test-environment is based upon an ATM network. ATM networks use a fixed packet length, so the use of the GPS emulating algorithm is allowed. A suitable GPS emulating algorithm is Worst-case Weighted Fair Queueing

Plus (WF$^2$Q+), proposed in "An experimental configuration for the evaluation of CAC algorithms", A. Moore, S. Crosby, Performance Evaluation Review 27 (3) (1999) 43-54. The WF$^2$Q+ scheduler is implemented in the network-element of the test-environment providing an environment within which the dynamic allocator can be constructed.

A scheduler will allow a network node to allocate link bandwidth to each session. However, for services such as voice, which is delay sensitive, bandwidth control is not enough. As noted above, flexible buffer control can improve the loss-rate of both packet and burst multiplexing. Therefore, buffer management provides the controls over loss while also controlling packet delay.

Control over the buffer capacity available to each traffic class is required if the implementation is to provide resources for loss or delay constraint as well as link bandwidth.

For delay-bound sessions, packets that exceed a buffer threshold are discarded but for loss-bound or throughput-guaranteed services the arriving packets are marked as eligible to be discarded if no further capacity remains in the total buffer pool shared among sessions. In this way the work-conserving scheduler is able to consume resource that would otherwise be unused.

According to the invention, there is provided an apparatus for providing communications network resource to a plurality of classes of use of the network, a different level of service being associated with each said class of use, said apparatus comprising: a demand estimator for estimating the demand for each of said plurality of classes of use; a dynamic resource allocator for allocating to each class a proportion of said communications network resource, the proportion allocated being dependent on the estimated demand for each class, the allocation optimising use of the available resource whilst at the same time ensuring that the level of service of each class is observed; and a communications network element for providing to each class the proportion of network resource allocated to it.

Preferably, said communications network resource comprises bandwidth of a communications channel fed by said network element and/or buffer depth in said network element.

Neither the scheduler or buffer technology per se is new, the novelty resides in the configuration of scheduler weights and buffer capacity and behaviour in combination with an MBE.

An ideal MBE would allow three critical resource computations: firstly, a computation of the capacity required to maintain a given delay-bound with a given probability; secondly, a computation of the capacity required to maintain a loss-rate, given a particular buffer size; and lastly, the buffer size required to maintain a loss-rate for a given rate of service, which would be required for a service with throughput guarantee. Finally, the estimator must be adaptive to changes in traffic and flexible to changes in the traffic classes.

An estimator is proposed in "Entropy of ATM traffic streams", N. G. Duffield, J. T. Lewis, N. O'Connell, R. Russell, F. Toomey, IEEE Journal on Selected Areas in Communications 13 (6) (1995) 981-990. Estimators such as those proposed initially seem ideal for the task because they are able to combine a series of measurements with any two of the input parameters of buffer size, loss rate, or effective bandwidth and compute an estimate of the third parameter. However, the type of estimator depends critically upon a traffic-dependent tuning value and no robust mechanism currently exists for computing this value.

Simpler measurement-based estimators are proposed in "Measurement-based connection admission control", R. J. Gibbens, F. P. Kelly, in: Proceedings of 15th International Teletraffic Congress (ITC15), 1997 or in "Comparison of measurement-based admission control algorithms for controlled-load service", S. Jamin, S. J. Shenker, P. B. Danzig, in: Proceedings of IEEE INFOCOM'97, Kobe, Japan, 1997. These or any estimator based upon a bufferless model of the network requires the computation of a complicated surface relating the desired outcome to the tuning parameter for each traffic-type. Additionally, this surface would need to exist in multiple dimensions in order to account for changes in each of link bandwidth, loss rate and queue size.

To allow ease-of-use, the MBE of the dynamic allocator must offer some relationship between calibrated controls (e.g. servicerate, loss-rate and buffer-size) and the traffic behaviour to be of use. Of equal importance is that the MBE must allow for the statistical nature of the measurement while being implementable with realistic demands on memory and processing as well as realistic demands on the measurements themselves. The present inventor realised that the traffic envelope algorithm of Knightly and Qiu could be adapted to result in improved resource allocation. This algorithm is described in "Measurement-based admission control with aggregate traffic envelopes", E. W. Knightly, J. Qiu, in: Proceedings of 10th Tyrrhenian International Workshop on Digital Communications, Ischia, Italy, 1998 and "QoS control via robust envelope-based MBAC", J. Qiu, E. W. Knightly, in: Proceedings of 7th IEEE/IFIP Workshop on Quality of Service IWQoS, Napa, CA, 1998.

Proposed originally by Qui and Knightly as an admission control algorithm, the present inventor has extracted the estimation component from the admission control framework. A precis of the original algorithm is given below.

The traffic envelope approach embraces the central issue that to characterise the rate of a particular traffic flow a period must be specified over which that characterisation is conducted. As a result this MBE, is able to characterise traffic over a series of time periods. The intention of this multi-period characterisation is to represent the short-term burstiness of traffic as well as that of the longer-term variation of the aggregate due to measurement error and longer time-scale fluctuations.

Firstly it is assumed that there exists a basic measurement period, $\tau$ -- possibly imposed by physical measurement limitations. Measurements may be taken over a multiple of this period and thus $I_{1,2,...,T} = 1,2,...,T \times \tau$. Thus, if the traffic activity on a link over the interval $[s,s+I_k]$ is represented as $X[s,s+I_k]$ then $\dfrac{X[s,s+I_k]}{I_k}$ is the rate over that particular period. [10] noted that the peak rate over any interval of length $I_k$ can be given by $R_k = \max_s X[s,s+I_k]$. This allows the specification of the *maximal rate envelope:* a set of rates $R_k$ that represent the maximum rate of the flow for each of the intervals $I_k$.

The activity in time slot $t$ is represented as $x_t$ such that $x_t = X[t\tau,(t+1)\tau]$. This allows a definition of the maximal rate envelope for the past $T$ time slots from the current time $t$ as

$$R_k^1 = \frac{1}{k\tau} \max_{t-T+k \leq s \leq t} \sum_{u=s-k+1}^{s} x_u \tag{1}$$

for $k = 1,2,...,T$. The envelope $R_k^1$, $k = 1,...,T$ describes the aggregate maximal rate envelope over intervals of length $I_k = k\tau$ in the most recent $T \cdot \tau$ seconds. [10] assert that this will describe short time-scale burstiness along with autocorrelation structure present in the flow.

If every $T \cdot \tau$ periods the current envelope is updated $R_k^n \leftarrow R_k^{(n-1)}$ for $k=1,2,...,T$ and $n = 2,...,N$, then a new envelope $R_k^1$ is computed using Equation 1. This allows the empirical mean $R_k$ of the $R_k^m$'s to be computed as $\sum_{m=1}^{M} \dfrac{R_k^m}{M}$. In turn this allows the variance between envelopes for the past $M$ windows of time $T \cdot \tau$ to be computed using

$$\sigma_k^2 = \frac{1}{M-1} \sum_{m=1}^{M} \left(R_k^m - \overline{R_k}\right)^2 . \tag{2}$$

Taking the mean and variance of $M$ consecutive traffic envelopes allows the variability of the traffic envelope itself to be characterised at longer time-scales.

From the traffic envelope, this MBE approach computes two estimates of effective bandwidth E, one for each of the two time-scales: short-term burstiness and long-term variance. For the long-term time-scale resulting from variance between traffic envelopes, the mean and standard deviation of the maximal traffic envelopes (those measured over $T \cdot \tau$) provide one estimate of the effective bandwidth,

$$E_{\text{long}} = \overline{R_T} + \alpha_{\text{long}} \sigma_T . \tag{3}$$

The value of $\alpha_{\text{long}}$ will determine how the estimator behaves in response to variability in the measured flow. It is possible to formulate $\alpha_{\text{long}}$ to dictate a specific confidence interval for these constraints. Qui and Knightly considered a large variety of distributions on which to base $\alpha_{\text{long}}$ -- settling upon a Gumbel distribution for its ability to describe the asymptotes of the extremes for a large range of other distributions (e.g. Gaussian, exponential, log-normal, Gamma, Raleigh). However other work indicates that a Gaussian distribution is adequate, as well as allowing a more tractable computation. Thus in each case the computation of $\alpha_{\text{long}}$ is based upon computing the inverse of a complementary CDF of an N(0,1) Gaussian distribution ($Q^{-1}(\cdot)$) based upon the maximum packet loss ($\varepsilon$) and the traffic envelope:

$$\alpha_{\text{long}} = Q^{-1}(\frac{\varepsilon \overline{R_T}}{\sigma_T}). \qquad (4)$$

For the shorter burstiness time-scale, a different estimator is used. The effective bandwidth requirement of the burst time-scale relates to the size of the buffer, $q$. The estimate of effective bandwidth requirement is computed from the maximum of the traffic envelope mean and standard deviation. In the following equation, $C$ -- the capacity of the link -- is required to compute the rate at which the buffer can be drained:

$$E_{\text{short}} = \max_{k=1,2,\ldots,T} \{\frac{(\overline{R_k} + \alpha_{\text{short}} \sigma_k)kT}{k\tau - \dfrac{q}{C}}\}. \qquad (5)$$

Unlike $E_{\text{long}}$, $E_{\text{short}}$ is computed using every value of $k$ in the traffic envelope. Once again, the standard deviation pre-multiplier will determine the response to variability in the measured flow. The derivation of $\alpha_{\text{short}}$ from the user supplied packet-loss, $\varepsilon$, and traffic envelope is

$$\alpha_{\text{short}} = Q^{-1}(\frac{\varepsilon \overline{R_T}}{\sigma_k}). \qquad (6)$$

The maximum of the two equations 3 and 5 can be considered the worst-case effective bandwidth estimate of the traffic flow described by the traffic envelope. This is given by

$$E = \max\{E_{\text{long}}, E_{\text{short}}\}. \qquad (7)$$

Qui and Knightly note the importance of the value of T, the maximum number of samples for a traffic envelope. An ideal value of T will provide the optimum use of resources, while too small a value of $T$ causes the variation over $\sigma_T$ to be large, so that the capacity-based estimate of Equation 3 will be pessimistic. Alternatively, if $T$ is too big the estimate derived for buffer occupancy will be too large causing the buffer based estimate, Equation 5, to be pessimistic. In Qui and Knightly's papers, a discussion is given over to locating the optimum value of $T$, a value typically on the order of a few seconds.

By using the ability to nominate queue size and overflow probability, service allocations can be computed for certain queue sizes. The boundary on the delay experienced through the buffering of any packet in a flow may be considered as the transmission time per packet multiplied by the capacity of the queue. As a result the ability to compute maximum buffer sizes from delay constraints allows the computation of service allocations treating the overflow probability as the same probability that packets will be delayed beyond the delay-bound.

In one arrangement, the scheduler implements a guaranteed fair-service queueing algorithm to bound queueing delays. The WF[2]Q+ supplies a weighted service for queued traffic with weights corresponding to the amount of service (link bandwidth) each aggregate-flow of traffic may use. The facilities of this scheduling algorithm mean that, for the implementation, no regard need be given to the potential delay of large weight values. Additionally, because the scheduler is work conserving for traffic that is not delay bound, there is no wasted resource: the scheduler will where appropriate reallocate any unused resource among queues with packets requiring service.

Traffic flowing through the network-element is measured as inputs for an MBE. Using allocation-policy nominated control parameters, either target loss-ratio or delay-bounds, the MBE computes resource requirements for each class of traffic. The available resource is then divided up, using a weighted value derived from these estimates, and each appropriate weighted value is then installed into the network-element's scheduler. This process is continuously repeated, updating the weights of the WF[2]Q+ values dynamically, as the traffic characteristics change.

In addition to allocating scheduler resource, it is possible to compute a queue size for a given loss rate and link capacity combination, as would be the case for a traffic-class with a guaranteed throughput. The computation of the capacity is given as

$$\overline{R_T} + \alpha_{\text{long}} \sigma_T = C,$$ (8)

where $\alpha_{\text{long}}$ is given in Equation 4. While an estimate of the queue size q is given by:

$$\max_{k=1,2,...,T} \{ k\tau (\overline{R_k} + \alpha_{\text{short}} \sigma_k - C) \} = q,$$ (9)

where Equation 6 defines the value of $\alpha_{short}$. For this implementation, previous experience with active buffer management in partially-shared buffers indicated that to ensure that there is an adequate differentiation between traffic, such systems are sensitive to the load of each traffic type in the buffer and to the actual threshold value used.

As a result, the approach taken here is different. The buffer sizing is not used as a principal mechanism to differentiate one session from another. Instead, buffer sizing is used principally as an upper-bound on the delay properties of traffic where appropriate. If traffic is delay sensitive then traffic delayed by more than a nominated amount has no value and that traffic exceeding this delay ought to be discarded. In contrast, the traffic may not be discarded if it exceeds the buffer thresholding values for flows that do not have an explicit delay constraint. This approach makes available transmission capacity that would have otherwise been wasted on traffic that was outside its delay constraint.

This scheme may be thought of as a form of work-conservation for the flows that have no delay-constraint but non-work-conservation for flows that do have a delay-constraint. The link-capacity that may be wasted on the delay constrained traffic with packets now too delayed to be of use are used by the traffic that has no such delay-constraint.

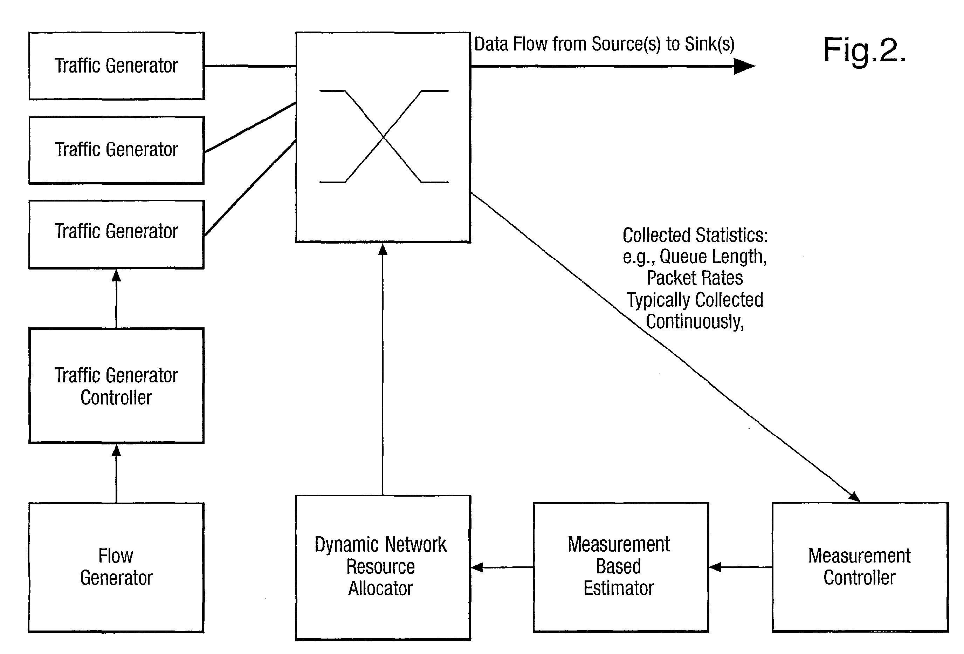

The test-environment consists of a combination of hardware and software. The hardware consists of the network-element (switch) and network interface cards. The software was written to obtain measurements from the network element, compute new configurations of flow-weights and buffer depths, generate network traffic and control the generation of traffic sources. Figure 2 shows the implementation architecture adopted to evaluate the dynamic allocator scheme.

Figure 2 illustrates that the MBE passes estimates to the dynamic allocator, based upon measurements of current utilisation. The allocator regularly recomputes and updates the configuration of the network-element installing the latest configuration for scheduler weights and buffer limits.

In this test environment, it is possible to start flows of traffic originating from model sources, video stream sources, pre-recorded traffic flows and actual elastic traffic such as TCP/IP. Such flows are initiated and terminated without any direct interaction with the dynamic allocator.

The test environment is based upon a Fore Systems ASX-200WG ATM switch as its network-element. The traffic generators are based upon Unix workstations (for TCP traffic), network-based video cameras and generators capable of creating synthetic workload. Computation of the estimates, as well as control of the test environment, is performed by task-dedicated Unix computers. Interaction with the network-element is done through a devolved control architecture based upon work described in "The Tempest, a Framework for Safe, Resource Assured, Programmable Networks", S. Rooney, J. E. van der Merwe, S. Crosby, I. Leslie IEEE Communications Magazine 36 (10) (1998) 42-53, using extensions to the Python programming language. The components of the test environment are described more fully in "An experimental configuration for the evaluation of CAC algorithms", A. Moore, S. Crosby, Performance Evaluation Review 27 (3) (1999) 43-54.

Drawn from the two examples of DiffServ given previously, two configurations are used to illustrate the behaviour of the MBE-based dynamic allocator. The first configuration is based upon Olympic differentiated service using three classes each receiving a proportion of the available link capacity. The second configuration is based upon absolute differentiated service where three different classes (one delay-bound, one loss-bound and one Best-Effort) share available resource.

The precise configuration of the policy is given alongside each set of results. The network is a dumbbell configuration with a single constriction point at the network-element. The link capacity is configured for 100 Mbps.

The results included in this section illustrate that the dynamic allocator is able to provide a number of differentiated services across a range of guarantees without the need for static allocation policy. This system is able to use the resources of link-capacity and buffer-space to provide service to all competing quality assurances with reduced resource waste. Importantly, this system performs better than best-effort by supplying differentiation. The implementation performs better than fixed resource policy by adapting to changing requirements and, by adapting to changing demands, dynamic allocation does not waste resources in the manner that fixed resourcing policy does.

Two distinct experiments are reported here, firstly the operation of an allocator with four classes of traffic as part of an Olympic service. The three Olympic services (Gold, Silver & Bronze) and a best-effort each receive a simple priority based allocation scheme.

In contrast, results are then presented for a set of experiments that provide quantitative assessment of the performance of the dynamic allocation mechanism, for a group of traffic classes with orthogonal requirements. Using a combination of low-latency voice traffic, low-loss video traffic and a best-effort class for web traffic, the flexibility and successful operation of the dynamic allocator is demonstrated.

In this section, figures illustrating the operation of the dynamic allocator are shown. The policy used is the Olympic service detailed previously.

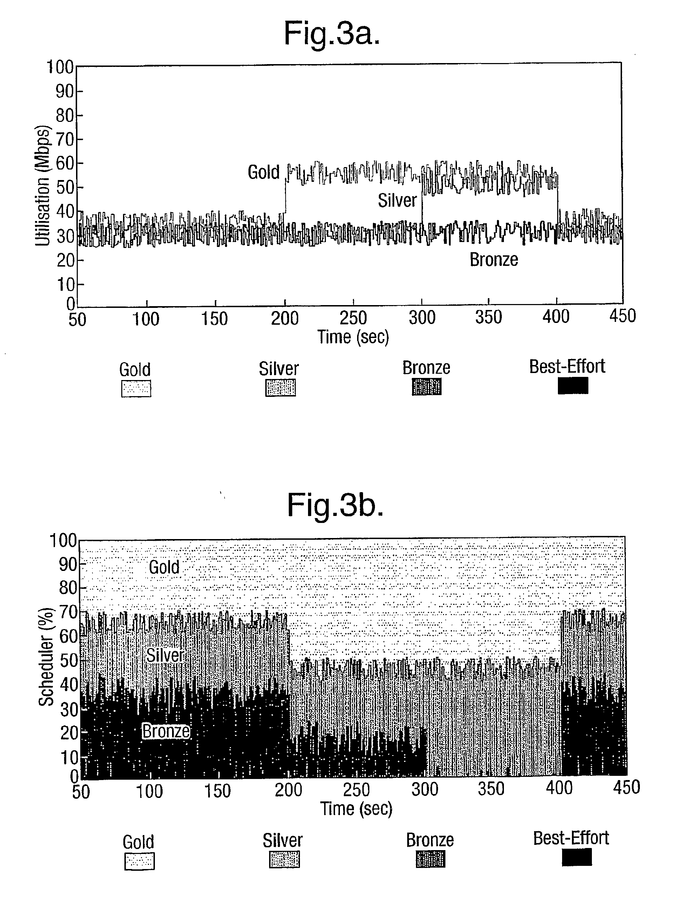

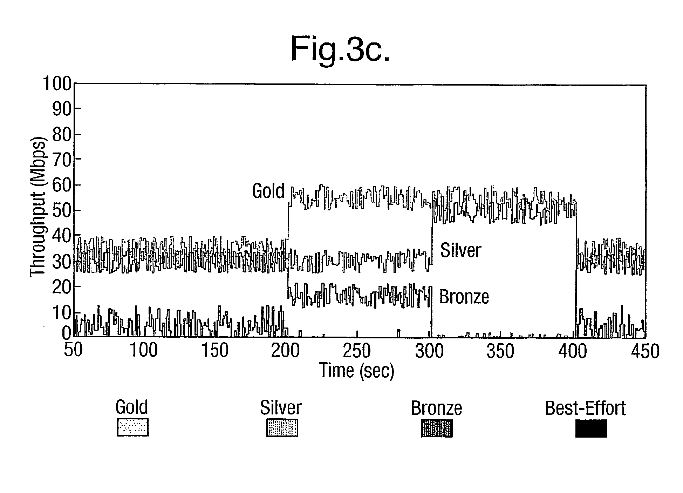

The dynamic allocator in operation is illustrated in Figure 3. The top graph Figure 3a shows the current resource demand of the three provisioned services. The middle graph Figure 3b shows the allocation of the scheduler to each traffic class. Each vertical line, representing the allocation in any particular allocation period, is divided into up to four segments. Each segment represents the allocation of bandwidth to one traffic class. The throughput experienced by each traffic class is plotted in Figure 3c.

From Figure 3 it is clear that at 200 seconds, an increase in the requirements for the Gold service have (virtually) eliminated any resource for a best-effort service. At the 300 second mark, the resource requirements of the Silver class have increased resulting in the Bronze service being penalised. Following a restoration in requirements of both Gold and Silver services to their former levels, service capacity is automatically made available to the Bronze service and remainder is available for the fourth, best-effort, service. It is quite apparent that any commitments made to the Bronze service were not sustained between 300 and 400 seconds, although such drop-outs in service may be part of the Service Level Agreement made between the network-provider and network-users.

Many alternatives in policy are possible. In this example strict allocation priority is maintained. Another network-provider may implement a restriction on the impact each service may have upon another. Because the allocation system is programmable, as indicated in Section 2.3, the process may incorporate any procedure the policy dictates.

As is illustrated by this example the scheme operates as required. The next section details the performance gained for experiments run over longer periods of time. These results, made with a system offering orthogonal services, are compared with the performance gained using non-dynamic allocation such as best-effort and fixed-allocation resourcing.

In a second experiment the dynamic allocator is configured with three classes of traffic. These classes include traffic that is delay-bound and loss-bound along with a best-effort class intended to use the remaining available capacity. The dynamic allocator was configured to reassess the current allocation every 100 ms. The configuration of the estimator had measurements made every 1.3 ms, with the MBE configured so that the measurements covered a period sufficiently large to sample beyond the reallocation period, (for the MBE of this algorithm, $\tau = 1.3$ ms, T = 200, and M = 4), therefore providing maximum protection from traffic fluctuations between consecutive allocations. The values were selected to place practical demands on memory, CPU and measurement systems. It is expected that these values would have a traffic-related optimum however, it was critical to illustrate that values dictated by the implementation environment could provide adequate results.

Table 1 lists each traffic class. Alongside the characteristics of each traffic class are listed the policy characteristics.

A combination of a low-delay voice aggregate, with a high-demand video aggregate, consumes the majority of the available capacity. The voice traffic operates as a continual flow arrival and departure process affording the test traffic the full dynamics of a multiplex of voice data flow characteristics. Each voice traffic flow, VP64S23, represents a silence-suppressed voice channel with a 64kbps peak, 23kbps mean and a mean-burst length of approximately 23068 octets or about 60 packets (1325 octets in length). These values are derived from ON and OFF times of 352 ms and 650 ms from "A model for generating ON-OFF speech patterns in two-way conversations", P. T. Brady, The Bell System Technical Journal 48 (9) (1969) 2445-2472.

The voice-traffic class carries a multiplex of VP64S23 flows. All active VP64S23 flows are multiplexed together to form the traffic aggregate carried in as the first traffic class.

Table 1 Parameters for traffic and policies of long duration dynamic allocator experiments.

| Traffic | Flow parameters | Policy |
|---|---|---|
| VP64S23 | 300 second mean hold time, log-normal distribution: 2 flows s$^{-1}$ mean, exponentially distributed | Delay sensitive $1 \times 10^{-5}$ ratio for packets delayed by >500$\mu$s ($1^{st}$ priority) |
| VP25S4 | 4 (continuous) flows | Loss Sensitive Target loss ratio $1 \times 10^{-4}$ ($2^{nd}$ priority) |
| WP10S1 | 10 (continuous) flows | Best-effort |

The video data consists of four permanent streams of VP25S4. The VP25S4 video traffic is based upon an MPEG encoded, non-adaptive, video stream. Each VP25S4 has a peak rate of 25 Mbps and a sustained rate of 4 Mbps. Starting at random (uncorrelated) locations in the video-stream, the multiplex of four streams of traffic provides the characteristics of high-capacity, high-throughput users combined with the statistical effects evident both in individual traffic streams and evident in a multiplex of strongly structured data.

The third traffic is WP10S1. This traffic consisting of TCP/IP streams, represents an aggregate of WWW transactions, and is transmitted as the 3rd class consuming remaining capacity. This class is elastic, using the remaining, unused capacity and as a result is affected by the ongoing availability of capacity. This source has previously been considered a multi-stage Markov chain.

For this traffic type, performance of the available capacity can be measured by the rate at which bytes of data are able to be transferred between the elastic traffic's server and client; this performance figure is given as the goodput in the results of Table 2.

Table 2 Results of long duration dynamic allocator experiments.

| Traffic | Results | | |
|---|---|---|---|
| | Mean Utilisation | Mean Allocation | Performance |
| Best Effort (no service differentiation) | | | |
| VP64S23 | 13.8 Mbps | --- | $9.4 \times 10^{-4}$ packets delayed |
| VP25S4 | 17.6 Mbps | --- | $2.7 \times 10^{-3}$ packets lost |
| WP10S1 | 10.0 Mbps | --- | 4.4 Mbps goodput |
| Fixed Service Allocation | | | |
| VP64S23 | 13.7 Mbps | 39.3 Mbps | 0 packets delayed |
| VP25S4 | 17.7 Mbps | 60.7 Mbps | $6.5 \times 10^{-5}$ packets lost |
| WP10S1 | 0 Mbps | 0 Mbps | 0 Mbps goodput |
| Dynamic Allocator | | | |
| VP64S23 | 13.8 Mbps | 27.6 Mbps | $2.2 \times 10^{-5}$ packets delayed |
| VP25S4 | 17.6 Mbps | 71.2 Mbps | $1.7 \times 10^{-5}$ packets lost |
| WP10S1 | 0.8 Mbps | 1.2 Mbps | 314 kbps goodput |

Aside from the goodput, Table 2 presents the achieved loss ratio for the video stream traffic and the ratio of voice packets delayed beyond the nominated delay constraint. This table presents results gained using best-effort, fixed allocation, and the dynamic allocator described as follows. The best-effort results were for a system that offered no service-differentiation between the three different classes. Clearly, the WWW traffic WP10S1 gained excellent goodput at the expense of the loss and delay of the video and audio traffic.

The fixed service allocation results gave the voice (in this example the highest priority) all the bandwidth required. The fixed bandwidth allocation was based upon the peak-rate requirements of the voice traffic. As VP64S23 flows start and stop, the allocated resource was adapted as required. An attempt was made to allocate to the video traffic a fixed bandwidth allocation based upon its peak-rate requirements, although this was never able to be satisfied. The immediate result for the video traffic was that there was insufficient bandwidth for an allocation that would satisfy the requirements outlined in Table 1. Finally, with allocations made for voice and video, there was no bandwidth remaining for a static allocation to the WP10S1 traffic and as a result no throughput or goodput was achieved.

Finally, the dynamic allocator results indicate that it was able to achieve the policy agreements in this system. However, along with the mean allocation requirements, the delay/loss ratios for both the VP64S23 and VP25S4 are taken from results taken over long-running experiments and results measured on a smaller timescale may indicate lower performance. Additionally, for the dynamic allocator results, the error margin on the packet-delay figures as they were gathered is still quite high, at $\pm 12\%$ with a 95% confidence interval for $1\times10^{-5}$ and $\pm 5\%$ with a 95% confidence interval for the packets-loss figure. Experiments for these results were run for a sufficient time to reduce the error due to sampling to less than $\pm 1\%$ with a 95% confidence interval. Thus, taking into account the precision of the results gained, it may be concluded that the dynamic allocator prototype worked successfully.

In the prior art, network-elements have employed inflexible fixed resource partitioning between different classes of traffic. The present invention uses Measurement-Based Estimation as input to a dynamic resource allocator. Such an allocator can offer differentiated service by adjusting the service-weighting on a queue scheduler and controlling the optimum buffer depth for queueing packets from each class. As a result, the specification of policy allows for a highly flexible scheme.

The results indicate that while this is not a general answer to all differentiated service network problems, this scheme provides a novel and unique approach to offer diverse, and orthogonal services to a wide variety of traffic types.

Problems may still remain with over-allocation due to delay constraints. However, without the support of a more complex scheduling algorithm, the approach taken gave acceptable results. Additionally, providing the best service for elastic traffic still requires further work.

In spite of the TCP-related drawbacks, the dynamic allocator is able to provide a service that is better than the fixed allocation approach, providing both voice and video data with the desired conditions of loss and delay. Additionally, by using the dynamic allocator in place of a fixed allocation, provision was available for a third, best-effort service that used the left-over bandwidth, a service not provided for at all in the fixed allocation approach.

## Claims

1. An apparatus for providing communications network resource to a plurality of classes of use of the network, a different level of service being associated with each said class of use, said apparatus comprising: a demand estimator for estimating the demand for each of said plurality of classes of use; a dynamic resource allocator for allocating to each class a proportion of said communications network resource, the proportion allocated being dependent on the estimated demand for each class, the allocation optimising use of the available resource whilst at the same time ensuring that the level of service of each class is observed; and a communications network element for providing to each class the proportion of network resource allocated to it wherein, in use, the dynamic resource allocator is adapted to dynamically adjust respective buffer depth for each of the classes for queuing data packets.

2. An apparatus according to claim 1 wherein said communications network resource comprises bandwidth of a communications channel fed by said network element and/or buffer depth in said network element.

3. An apparatus as claimed in claim 1 or 2 wherein said demand estimator uses a traffic envelope scheme in which traffic flow is **characterised by** specifying a particular period or periods over which that characterisation is conducted.

4. An apparatus as claimed in claim 3 wherein the mean and variance of consecutive traffic envelopes is determined to estimate effective bandwidth requirements.

5. An apparatus as claimed in claim 3 or 4 wherein a first effective bandwidth, E long, given by $E_{\text{long}} = \overline{R_T} + \alpha_{\text{long}}\,\sigma_T$

and a second effective bandwidth, E short, given by $E_{\text{short}} = \max\limits_{k=1,2,\ldots,T}\left\{\dfrac{(\overline{R_k} + \alpha_{\text{short}}\sigma_k)kT}{k\tau - \dfrac{q}{C}}\right\}$ are used to give the worst case effective bandwidth estimate E of the traffic flow described by the traffic envelope $E = \max\{E_{\text{long}}, E_{\text{short}}\}$, where the terms used in the equations are defined in the present specification.

6. An apparatus as claimed in any preceding claim wherein a best-effort service is provided as one of the classes.

7. An apparatus as claimed in any preceding claim wherein voice and/or video data is transferred across the network.

## Patentansprüche

1. Vorrichtung zum Bereitstellen einer Kommunikationsnetzressource für eine Mehrzahl von Verwendungsklassen des Netzwerks, wobei jeder Verwendungsklasse eine verschiedene Dienstgüte zugeordnet ist, wobei die Vorrichtung umfasst: einen Nachfrageschätzer zum Schätzen der Nachfrage nach jeder der Mehrzahl von Verwendungsklassen; einen dynamischen Ressourcenzuteiler zum Zuteilen eines Anteils der Kommunikationsnetzressource zu jeder Klasse, wobei der zugeteilte Anteil von der geschätzten Nachfrage für jede Klasse abhängt, wobei die Zuteilung Verwendung der verfügbaren Ressource optimiert, während sie gleichzeitig sicherstellt, dass die Dienstgüte jeder Klasse eingehalten wird; und ein Kommunikationsnetzelement zum Bereitstellen für jede Klasse des ihr zugeteilten Anteils der Netzressource, wobei in Verwendung der dynamische Ressourcenzuteiler so ausgelegt ist, dass er eine jeweilige Puffertiefe für jede der Klassen für Warteschlangen-Datenpakete dynamisch anpasst.

**2.** Vorrichtung nach Anspruch 1, wobei die Kommunikationsnetzressource Bandbreite eines Kommunikationskanals, der durch das Netzelement zugeführt wird, und/oder Puffertiefe im Netzelement umfasst.

**3.** Vorrichtung nach Anspruch 1 oder 2, wobei der Nachfrageschätzer ein Verkehrs-Envelope-Schema verwendet, in welchem Verkehrsfluss durch Spezifizieren einer bestimmten Periode oder von bestimmten Perioden charakterisiert ist, über welche die Charakterisierung durchgeführt wird.

**4.** Vorrichtung nach Anspruch 3, wobei das Mittel und die Varianz von aufeinander folgenden Verkehrs-Envelopes bestimmt werden, um effektive Bandbreitenanforderungen zu schätzen.

**5.** Vorrichtung nach Anspruch 3 oder 4, wobei eine erste effektive Bandbreite, E long, gegeben durch $E_{\text{long}} = \overline{R_T}$ $+\alpha_{\text{long}}\sigma_T$, und eine zweite effektive Bandbreite, E short, gegeben durch

$$E_{\text{short}} = \max_{k=1,2,\dots,T} \left\{ \frac{(\overline{R_k} + \alpha_{\text{short}}\sigma_k)kT}{k\tau - \dfrac{q}{C}} \right\},$$ verwendet werden, um die ungünstigste effektive Bandbreitenschätzung E des Verkehrsflusses zu ergeben, die durch das Verkehrs-Envelope $E = \max\{E_{\text{long}}, E_{\text{short}}\}$ beschrieben wird, wobei die in den Gleichungen verwendeten Ausdrücke in der vorliegenden Spezifikation definiert sind.

**6.** Vorrichtung nach einem der vorhergehenden Ansprüche, wobei ein Best-Effort-Dienst als eine der Klassen bereitgestellt wird.

**7.** Vorrichtung nach einem der vorhergehenden Ansprüche, wobei Sprach- und/oder Videodaten über das Netzwerk übertragen werden.


## Revendications

**1.** Dispositif de fourniture de ressources de réseau de communication à une pluralité de classes d'utilisation du réseau, un niveau de service différent étant associé à chacune desdites classe d'utilisation, ledit dispositif comprenant : un estimateur de demande pour estimer la demande pour chacune de ladite pluralité de classes d'utilisation ; un allocateur de ressource dynamique pour allouer à chaque classe une proportion desdites ressources de réseau de communication, la proportion allouée étant fonction de la demande estimée pour chaque classe, l'allocation optimisant l'utilisation de la ressource disponible tout en garantissant en même temps que le niveau de service de chaque classe est respecté ; et un élément de réseau de communication pour fournir à chaque classe la proportion de ressource de réseau qui lui est allouée, dans lequel, en utilisation, l'allocateur de ressource dynamique est adapté afin d'ajuster dynamiquement la profondeur de mémoire tampon respective pour chacune des classes pour mettre en file d'attente les paquets de données.

**2.** Dispositif selon la revendication 1, dans lequel ladite ressource de réseau de communications comprend une bande passante d'un canal de communications alimenté par ledit élément de réseau et/ou une profondeur de mémoire tampon dans ledit élément de réseau.

**3.** Dispositif selon les revendications 1 ou 2, dans lequel ledit estimateur de demande utilise un mécanisme d'enveloppe de trafic dans lequel le flux de trafic est caractérisé en spécifiant une période ou des périodes particulières sur lesquelles cette caractérisation est mise en oeuvre.

**4.** Dispositif selon la revendication 3, dans lequel la moyenne et la variance des enveloppes de trafic consécutives est déterminée afin d'estimer les exigences de bande passante effectives.

**5.** Dispositif selon les revendications 3 ou 4, dans lequel une première bande passante effective, E long, donnée par $E_{\text{long}} = \overline{R_T} + \alpha_{\text{long}}\ \sigma_T$ et une seconde bande passante effective, E short, donnée par sont utilisées pour donner l'estimation de bande passante effective E dans le pire des cas du flux de trafic

$$E_{short} = \max_{k=1,2,\ldots,T} \{ \frac{(\overline{R_k} + \alpha_{short}\sigma_k)kT}{k\tau - \dfrac{q}{C}} \}$$ sont utilisées pour donner l'estimation de bande passante effective E dans le pire des cas du flux de trafic décrit par l'enveloppe de trafic E = max {$E_{long}$, $E_{short}$}, où les termes utilisés dans les équations sont définis dans la présente spécification.

6. Dispositif selon une quelconque des revendications précédentes, dans lequel un service au meilleur effort est fourni comme une des classes.

7. Dispositif selon une quelconque des revendications précédentes, dans lequel des données vocales et/ou vidéo sont transférées au travers du réseau.

# Fig.1.

Measurement Based Estimator

Estimates

Dynamic Resource Allocator

Utilisation (Bits/Sec.)

Max. Buffer Depth

Weights (Determine Bandwidth Allocation on Communication Channel)

Gold

Buffer

Silver

Buffer

Bronze

Buffer

Scheduler

Outgoing Link (Communication Channel)

(2)

(1)

(2)

(1)

Network Element (Switch)

(In Fig.2.)

(1) To Measurement Based Estimator (Utilisation)
(2) From Dynamic Resource Allocator (Max. Buffer Depth)

EP 1 488 580 B1

Fig.2.

Data Flow from Source(s) to Sink(s)

Traffic Generator

Traffic Generator

Traffic Generator

Traffic Generator Controller

Flow Generator

Collected Statistics:
e.g., Queue Length,
Packet Rates
Typically Collected
Continuously,

Dynamic Network Resource Allocator

Measurement Based Estimator

Measurement Controller

EP 1 488 580 B1

# Fig.3a.

# Fig.3b.

# Fig.3c.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9714240 A1

### Non-patent literature cited in the description

- **A. MOORE ; S. CROSBY.** An experimental configuration for the evaluation of CAC algorithms. *Performance Evaluation Review,* 1999, vol. 27 (3), 43-54
- **N. G. DUFFIELD ; J. T. LEWIS ; N. O'CONNELL ; R. RUSSELL ; F. TOOMEY.** Entropy of ATM traffic streams. *IEEE Journal on Selected Areas in Communications,* 1995, vol. 13 (6), 981-990
- **R. J. GIBBENS ; F. P. KELLY.** Measurement-based connection admission control. *Proceedings of 15th International Teletraffic Congress,* 1997
- **S. JAMIN ; S. J. SHENKER ; P. B. DANZIG.** Comparison of measurement-based admission control algorithms for controlled-load service. *Proceedings of IEEE INFOCOM'97,* 1997

- **E. W. KNIGHTLY ; J. QIU.** Measurement-based admission control with aggregate traffic envelopes. *Proceedings of 10th Tyrrhenian International Workshop on Digital Communications,* 1998
- **J. QIU ; E. W. KNIGHTLY.** QoS control via robust envelope-based MBAC. *Proceedings of 7th IEEE/IFIP Workshop on Quality of Service IWQoS,* 1998
- **S. ROONEY ; J. E. VAN DER MERWE ; S. CROSBY ; I. LESLIE.** The Tempest, a Framework for Safe, Resource Assured, Programmable Networks. *IEEE Communications Magazine,* 1998, vol. 36 (10), 42-53
- **P. T. BRADY.** A model for generating ON-OFF speech patterns in two-way conversations. *The Bell System Technical Journal,* 1969, vol. 48 (9), 2445-2472